# EUROPEAN PATENT APPLICATION

(11) **EP 3 354 329 A1**
(43) Date of publication of application: **01.08.2018**
(21) Application number: 17153062.9
(22) Date of filing: 25.01.2017
(51) Int. Cl.: B01D 61/18, B01D 61/22

(54) **FILTRATION SYSTEM INCORPORATING VISCOMETER**

(71) Applicant: Sartorius Stedim Biotech GmbH, 37079 Göttingen (DE); The Automation Partnership (Cambridge) Limited, Royston, Hertfordshire SG8 5WY (GB)
(72) Inventor: WALES, Richard, St. Neots, Cambridgeshire PE19 7AQ (GB); BARGH, Neil, Royston, Hertfordshire SG8 5BN (GB); LEUTHOLD, Martin, 37079 Göttingen (DE)
(74) Representative: Prinz & Partner mbB

(57) **Abstract**

A filtration system (10), in particular for a low volume tangential flow filtration process, comprises a filter device (24) including at least one membrane (18), and at least one input (12) for supplying a feed stream to a retentate loop (14). The retentate loop (14) includes a pump (16) for circulating the feed stream along one side of the membrane (18). The filtration system (10) further comprises a retentate output (22) allowing retentate to exit the retentate loop (14), and a permeate output (20) allowing permeate to exit the feed stream at the other side of the membrane (18). The filtration system (10) is characterised by a viscometer (42) integrated in the retentate loop (14).

## Description

The invention relates to a filtration system, in particular but not exclusively for low volume tangential flow filtration processes, incorporating a viscometer. The invention further relates to a method of running a filtration process, in particular an ultrafiltration or diafiltration process, in such a filtration system.

In the field of biopharmaceutical manufacturing (UF) and diafiltration (DF) are commonly used as downstream processing steps for product concentration and/or buffer exchange. The basis of both UF and DF processing is filtration with a membrane that retains product and allows non-target molecules (e.g. water, salts, residuals, etc.) to flow through the membrane to waste. UF is most commonly used for concentrating a dilute product stream, while DF is most often used to exchange a product into a desired buffer (e.g. from an elution buffer into a final formulation buffer).

During UF, molecules in solution are separated based on size using membranes (filters) of a selected pore size. According to the concept of tangential flow filtration (TFF) the feed stream flows parallel to the membrane surface and is continuously re-circulated across the membranes with the primary objective of removing excess water and buffer from the feed stream. The target molecules flowing parallel to the membrane exit as retained product ("retentate"), while unwanted molecules (e.g. water or buffer components) due to the transmembrane pressure (TMP) acting as the driving force pass through the membrane as waste ("permeate").

The basic setup for DF is similar to the basic setup for UF. DF is generally used to change the chemical properties of the retained solution under constant volume. Unwanted particles pass through the membrane while the make-up of the feed stream is changed to a more desirable state through the addition of a replacement solution. Therefore, DF buffer is fed to the retentate vessel at the same rate that permeate is leaving the system (unlike UF processes, where there is no buffer being added to the system, or DF buffer is added before or after at least one concentration (UF) phase).

With regard to the design of biological manufacturing processes, a key problem faced in the development of biological products is that small changes in the amino acid sequence in a protein biological product may have large unpredictable impacts on the behaviour of the protein in the late stages of UF/DF downstream processing in which the protein is concentrated and transferred to the formulation buffer. There is significant interest in the biomanufacturing industry in screening proteins for robustness and behaviours in UF/DF processes at earlier stages of development (in which typically only low amounts of the biological product is available), screening buffers for protective and detrimental effects on proteins during UF/DF processes earlier in development, and identifying process parameters that impact on or protect proteins during UF/DF.

Especially in the context of low volume TFF processes, but not exclusively, it is desired to monitor the viscosity of the product stream. So far the viscosity of samples is generally measured only at the end of a filtration run, or samples are taken manually throughout the run. In both cases viscosity is measured off-line. There are several key problems related to off-line measuring:

The samples are destroyed in the process of measuring the viscosity. This is particularly a problem in the case of high protein concentrations as significant amounts of product are required. This problem is further exaggerated with the use of low volume UF/DF systems, applied to reduce the amount of sample required when only small amounts of sample product are available in the early stages of process development. A major problem is of course the manual effort required to repeatedly sample the system. Further, the delay between the collection of a sample and the measurement outside the process environment may allow, or cause through some means, a change in the nature of the sample such that the viscosity measured does not reflect the real viscosity relevant to the process. Moreover, for some applications, e.g. antibody-drug conjugate processing, the handling of toxic substances is involved. Closed systems including monitoring technologies would greatly increase the safety and usability of such systems.

The overall result of the above-mentioned key problems is that data on viscosity is collected infrequently and is insufficient to provide insight into the interaction between the process and the development of viscosity in the sample. For example, the discrete point at which a viscosity shift is triggered by a change in pH beyond a specific limit may not be identified without continuous monitoring of viscosity.

It is an object of the invention to avoid at least some of the key problems of measuring the viscosity of samples off-line and provide benefits currently not available.

This object is achieved by a filtration system according to claim 1 and also by a method of running a filtration process according to claim 13. Advantageous and expedient embodiments of the invention are apparent from the associated dependent claims.

The invention provides a filtration system, in particular for a low volume tangential flow filtration process, comprising a filter device including at least one membrane, and at least one input for supplying a feed stream to a retentate loop. The retentate loop includes a pump for circulating the feed stream along one side of the membrane. The filtration system further comprises a retentate output allowing retentate to exit the retentate loop, and a permeate output allowing permeate to exit the feed stream at the other side of the membrane. The filtration system according to the invention is characterised by a viscometer integrated in the retentate loop.

Irrespective of how it is actually formed, integrating the viscometer in the retentate loop of the filtration system allows automated continuous or repeated measurement of the viscosity of the feed stream. With the essentially continuous viscosity data delivered, a viscosity profile can be established so that the development of viscous behaviour during a filtration run will become apparent. The viscous behaviour permits full insight into the impact of the filtration process on viscosity. In turn, determining the viscosity development, e.g. in high concentration protein formulations with respect to process details like buffer exchange rate etc., enables fine tuning of the process and greater process space exploration.

The invention is particularly useful in UF/DF applications, such as concentration or diafiltration of protein solutions and identification of optimal formulations for such molecules, for example in drug product development. Other potential applications include the food industry where viscosity is a factor influencing or to be influenced by a TFF process.

A major benefit of the invention is that due to the integration of the viscometer in the retentate loop no valuable samples are lost as in off-line monitoring, which is especially important in small-scale filtration runs in the early stages of process development.

Automated measurements with the integrated viscometer do not require manual sampling, thus allowing "walk-away" operation for the end user.

The viscometer integrated in the retentate loop of the filtration system can be a self-contained instrument.

Alternatively, the viscometer may also be formed by a combination of (separate) sensors, in particular flow-rate and pressure sensors. In this case the measurement of viscosity is based on flow rate and pressure measurements within the filtration system during system operation. In fact, the viscosity values are calculated from the measured flow rate and pressure values. Such measurements can be made prior to sample loading and/or with sample and/or after completion of the sample run. Some values may not be obtained directly but indirectly. For example, a flow rate value can be derived from other values such as pump speed where calibration between speed and resulting flow rate is known.

According to a specific embodiment the viscometer includes a proportional control valve. The control valve can be used in combination with pressure sensors within the filtration system to determine the viscosity.

For a careful documentation of the filtration runs and proper evaluation of the results it is useful to record the values measured by the viscometer in an electronic memory.

It is also useful to provide a display for indicating the values measured by the viscometer, preferably in real-time.

A key aspect of the invention is the utilisation of the measured viscosity during operation of the filtration system in real-time. To this end, a control unit is provided which is capable of adapting certain parameters of a filtration run based on values measured by the viscometer. In particular, the measured values can be supplied to a special control algorithm running in the control unit. The (processed) viscosity values can be used to decide about triggering or delaying a subsequent process step, for example a change on the DF buffer being supplied to mitigate the viscosity change or termination of the DF process. The algorithm utilising the viscosity values may also be configured to adjust the transmembrane pressure (pressure difference between feed and permeate streams) and/or the cross-flow rate and/or to influence temperature control of the process. For more accurate adaptation and/or adaptation of further process parameters the algorithm can also incorporate other data recorded on the filtration system and/or historic data held in a database. Generally, while the viscosity values - independently or with other information - may be used to control the harvest process and/or to determine the product concentration, a range of other control approaches based on viscosity readings are also possible. One further example would be to use a set viscosity target as the end point for a manufacturing process.

The filtration system according to the invention can be enhanced by additional sensors, including at least one of the following: temperature sensor, pressure sensor, pH sensor, conductivity sensor. Accordingly, in addition to the measured viscosity values, e.g. temperature values measured by one or more temperature sensors can be involved in adapting the process parameters.

According to a first potential setup of the filtration system, the viscometer is integrated in-line in the retentate loop. This means that the viscometer is part of the main line (flow path) of the retentate loop, usually without any bypass around the viscometer.

According to a second potential setup of the filtration system, the viscometer is integrated on-line in the retentate loop. This means that retentate is automatically sampled/diverted from the retentate loop to the viscometer by the system and returned to the main line (flow path) of the retentate loop.

According to a third potential setup of the filtration system, the viscometer is integrated at-line in the retentate loop. This means that retentate is automatically sampled/diverted from the retentate loop to the viscometer by the system and not returned to the main line (flow path) of the retentate loop, but is directed to waste or collected as a sample for removal from the filtration system.

In a preferred embodiment of the viscometer, at least the membrane and pressure sensors for detecting a pressure drop are arranged in a single assembly. This assembly may further include one or more temperature sensors.

The invention also provides a method of running a filtration process, in particular an ultrafiltration or diafiltration process, in a filtration system according to the invention. The method according to the invention includes the step of measuring the viscosity of the feed stream. As described above, the filtration system according to the invention makes it possible to obtain live or real-time information about the viscosity of the feed stream which is not possible with known systems or methods.

For accurate information the method preferably comprises the step of performing a viscosity calibration process using at least one fluid of known (absolute or relative) viscosity.

Measurement of the water flux through a filter using standard operating parameter settings in UF process systems is a standard approach to assessing the characteristics of a filter at the start of and end of a run. Whilst the flux rate is of no importance to the viscosity measurement itself within the system, the pressures at the inlet to and outlet from the retentate side of the filter in combination with the flow rate through the retentate side do allow the determination of the background characteristics of the system for viscosity measurement. The use of such data from a test prior to sample loading provides an initial system calibration. Repetition of the water flux test at the end of the run allows the assessment of whether such characteristics of the system have changed during the experimental run and therefore the validity of the viscosity measurements taken over the duration of the experimental processing of the sample. Additionally, data on changes in any such characteristics throughout the run can be used to adjust viscosity data collected. In an automated system such pre and post viscosity calibration can be carried out automatically and further, collected data adjustment can be automated.

Water is of relatively low viscosity, and as such there are cases where it may be more appropriate to carry out such calibration of the system characteristics using higher viscosity fluids. Accordingly, prior to the sample being loaded the system may be operated with a solution of known viscosity, for example using a glycerol solution and data collected and utilised as above. Such calibration may also be carried out again at the end of sample processing to assess the impact of the process on the system with respect to viscosity measurement as above.

Additionally, fluids may be used providing multiple calibration functions. For example, prior to sample loading, calibration of multiple sensors may be carried out with a fluid of known pH, conductivity and/or viscosity appropriate to the experimental process to be executed enabling single step calibration of multiple sensing systems.

In view of long-term reliable viscosity measurements over several successive filtration runs, it should be ensured that the filter cassette/device including the membrane is re-checked following a filtration run to confirm that the prior calibration for viscosity is still valid.

According to a further aspect of the invention, the membrane (or the filter cassette/device including the membrane) is supplied as a previously specified component for viscosity determination.

According to a still further aspect of the invention, deviations of the values measured by the viscometer due to a change in the character of the membrane, e.g. caused by the process (development of gel layer etc.), are compensated for automatically through inclusion of data from other measurements within the filtration system, in particular measurements of transmembrane pressure and/or permeate flux and/or flux ratio, into an algorithm calculating the viscosity.

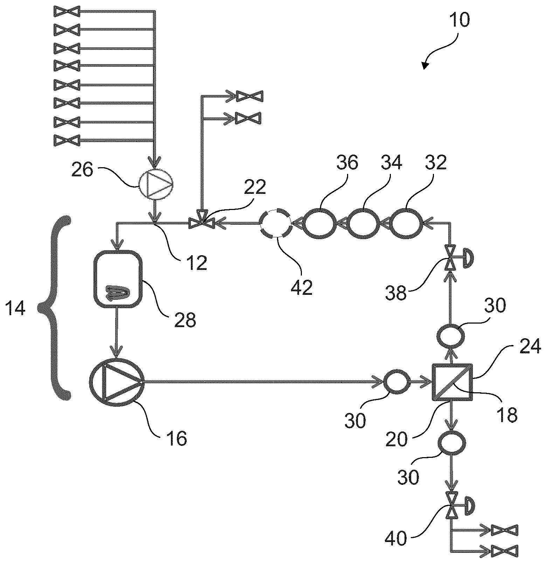

Further features and advantages of the invention will become apparent from the following description and from the accompanying drawing to which reference is made. In the drawing the only Figure shows a setup of a filtration system according to an embodiment of the invention.

The filtration system 10 to be described here may be formed as a separate device, or it may be formed as a filtration unit of a modular filtration system which includes a plurality of similar filtration units.

In accordance with the basic setup of any ultrafiltration/diafiltration system, the filtration system 10 shown in the Figure comprises an input 12 through which a feed stream is supplied to a retentate loop 14. In the retentate loop 14 a peristaltic pump 16 circulates the feed stream along one side of at least one filter membrane 18. A retentate output 22 is used to extract retentate from the retentate loop 14 (harvest). On the other side of the membrane 18 a permeate output 20 allows permeate to exit the feed stream.

The membrane(s) 18 is/are part of a filter cassette which can be inserted into a receptacle of a specific filter device 24. Of course, other configurations of the membrane(s) 18 are possible as well.

Since the basic operation of an ultrafiltration/diafiltration system is known to the person skilled in the art, no further details are given here.

Further optional components of the filtration system 10 shown in the Figure include another peristaltic pump 26 at the input 12, a stirred retentate vessel mounted on a load cell 28 used in combination with accurate pump control of buffer/feed addition, several pressure sensors 30, a pH sensor 32, a temperature sensor 34, a conductivity sensor 36, and automated retentate and permeate valves 38 and 40, respectively. This list is not exhaustive, and more than one sensor of each type may be used at different locations within the filtration system 10. In particular, temperature sensors 34 may be combined with the pressure sensors 30.

The setup of the filtration system 10 is however characterised by a viscometer 42 integrated in the retentate loop 14. The viscometer 42 allows continuous or repeated in-line viscosity measurements of the feed stream during a running process. The viscometer 42 may be formed as a self-contained instrument, i.e. an instrument of its own, or by a functional combination of separate sensors, especially flow-rate and pressure sensors. In the latter case the data from the sensors are used to calculate the viscosity. The results of such calculations shall also be regarded as values measured by the viscometer 42. The calculations may be performed in a remote processing unit, especially if the sensors are not accommodated in a single device.

The filtration system 10 further includes an electronic memory for recording the values measured by the viscometer 42. The filtration system 10 also includes a display for real-time indication of the measured values. The measured values are forwarded to a control unit which adapts certain parameters of a running process based on the current viscosity values.

In the control unit an algorithm is supplied with the measured viscosity values and, if applicable, with various further data. The algorithm processes the data and makes adjustments, e.g. with respect to temperature control of the process, and/or takes certain decisions, e.g. whether a subsequent process step is triggered or delayed.

The viscometer 42 can be integrated in the retentate loop 14 in several ways. In the embodiment shown in the Figure, the viscometer 42 is part of the main line (flow path) of the retentate loop 14. This setup is called in-line integration here. A bypass around the viscometer 42 is not provided.

According to another potential setup of the filtration system 10, retentate is automatically sampled or diverted from the retentate loop 14 to the viscometer 42 by the system and returned afterwards to the main line of the retentate loop 14. This setup can be referred to as on-line integration.

Still another possibility, which can be called at-line integration, provides that retentate is automatically sampled or diverted from the retentate loop 14 to the viscometer 42 by the system and not returned to the main line of the retentate loop 14. The extracted retentate is rather directed to waste or collected as a sample for removal from the filtration system 10.

Before a filtration run in the filtration system 10 is started, usually a flux test is performed (while an optional sanitation process may be performed before or after the flux test). The membrane(s) 18 of the filter device 24 are flushed with water, and the normalised water permeability (NWP) of the membranes 18 is measured to obtain flux and pressure baselines. The filtrate flux is the rate the liquid passes through the membrane(s) 18, and may also be called the permeate flow rate. Therefore, the NWP is the amount of water that will flow through the membranes at a specific driving force (TMP). Data acquired during the water flux test from the flow rates and pressure sensors 30 on the retentate side of the filter device 24 or similarly from buffers of known viscosity in a calibration process provides information on the background characteristics of the system with respect to viscosity enabling calibration for the viscometer 42.

A reference measurement, e.g. by a Wheatstone bridge, may be used to obtain the relative viscosity increase be concentration of the target molecule(s). In particular, measuring the viscosity of the permeate (best case: no product) provides at least a kind of reference (buffer only, viscosity typically close to water) to the retentate loop fluid. Alternatively, a reference solution outside the loop or of another filtration system 12 could be used. An additional calibration may not be necessary to check different viscosity increases (e.g. by formulation buffers).

## Claims

1. A filtration system (10), in particular for a low volume tangential flow filtration process, the filtration system (10) comprising
a filter device (24) including at least one membrane (18),
at least one input (12) for supplying a feed stream to a retentate loop (14),
the retentate loop (14) including a pump (16) for circulating the feed stream along one side of the membrane (18),
a retentate output (22) allowing retentate to exit the retentate loop (14), and
a permeate output (20) allowing permeate to exit the feed stream at the other side of the membrane (18),
the filtration system (10) being **characterised by** a viscometer (42) integrated in the retentate loop (14).

2. The filtration system (10) according to claim 1, **characterised in that** the viscometer (42) is a self-contained instrument.

3. The filtration system (10) according to claim 1, **characterised in that** the viscometer (42) is formed by a combination of sensors, in particular flow-rate and pressure sensors.

4. The filtration system (10) according to claim 3, **characterised in that** the flow rate sensor includes a pump speed sensor and a pressure sensor (34).

5. The filtration system (10) according to any of the preceding claims, **characterised by** an electronic memory for recording values measured by the viscometer (42).

6. The filtration system (10) according to any of the preceding claims, **characterised by** a display for indication of values measured by the viscometer (42), preferably in real-time.

7. The filtration system (10) according to any of the preceding claims, **characterised by** a control unit capable of adapting certain parameters of a filtration run based on values measured by the viscometer (42).

8. The filtration system (10) according to any of the preceding claims, **characterised by** additional sensors, including at least one of the following: temperature sensor (36), pressure sensor (30), pH sensor (32), conductivity sensor (34).

9. The filtration system (10) according to any of the preceding claims, **characterised in that** the viscometer (42) is integrated in-line in the retentate loop (14).

10. The filtration system (10) according to any of claims 1 to 8, **characterised in that** the viscometer (42) is integrated on-line in the retentate loop (14).

11. The filtration system (10) according to any of claims 1 to 8, **characterised in that** the viscometer (42) is integrated at-line in the retentate loop (14).

12. The filtration system (10) according to any of the preceding claims, **characterised in that** at least the membrane (18) and pressure sensors for detecting a pressure drop are arranged in a single assembly.

13. A method of running a filtration process, in particular an ultrafiltration or diafiltration process, in a filtration system (10) according to one of the preceding claims, the method including the step of determining the viscosity of the feed stream.

14. The method according to claim 13, **characterised by** the step of performing a viscosity calibration process using at least one fluid of known viscosity.

15. The method according to claim 14, **characterised in that** in the calibration process a reference pressure drop on the retentate side of the membrane (18) is determined using data obtained in a water flux test.

16. The method according to claim 14 or 15, **characterised in that** in the calibration process a reference pressure drop on the retentate side of the filter is determined using data obtained with at least one fluid, preferably a buffer, of known viscosity.

17. The method according to any of claims 14 to 16, **characterised in that** in the calibration process a reference pressure drop on the retentate side of the filter is determined using data obtained with a combination of fluids, preferably water and a buffer, of known viscosity.

18. The method according to any of claims 14 to 17, **characterised in that** in the calibration process a reference pressure drop on the retentate side of the filter is determined using a fluid of known characteristics with respect to multiple integrated sensing systems allowing parallel single-step calibration of the sensing systems.

19. The method according to any of claims 13 to 18, **characterised in that** the membrane (18) is re-checked following an filtration process run to confirm that the prior calibration for viscosity is still valid.

20. The method according to any of claims 13 to 19, **characterised in that** the membrane (18) is supplied as a previously specified component for viscosity determination.

21. The method according to any of claims 13 to 20, **characterised in that** deviations of the values measured by the viscometer (42) due to a change in the character of the membrane (18) are compensated for automatically through inclusion of data from other measurements within the filtration system (10), in particular measurements of transmembrane pressure and/or permeate flux and/or flux ratio, into an algorithm calculating the viscosity.
